# EUROPÄISCHE PATENTSCHRIFT

(11) **EP 1 244 344 B1**
(45) Veröffentlichungstag und Bekanntmachung des Hinweises auf die Patenterteilung: **23.11.2005**
(21) Anmeldenummer: 99941539.1
(22) Anmeldetag: 07.08.1999
(51) Int. Cl.: A01G 9/10

(54) **VERFAHREN UND VORRICHTUNG ZUR WACHSTUMSSTEUERUNG VON PFLANZEN**
METHOD AND DEVICE FOR PROMOTING THE GROWTH OF PLANTS
PROCEDE ET DISPOSITIF POUR LA REGULATION DE LA CROISSANCE DE PLANTES

(43) Veröffentlichungstag der Anmeldung: 02.10.2002
(73) Patentinhaber: Böhringer, Eberhard, 27211 Bassum (DE)
(72) Erfinder: Böhringer, Eberhard, 27211 Bassum (DE)
(74) Vertreter: Engelmann, Kristiana
(86) Internationale Anmeldenummer: PCT/EP1999/005731
(87) Internationale Veröffentlichungsnummer: WO 2001/010189

(56) Entgegenhaltungen:
- DE-A- 19 516 572
- DE-A- 19 817 983
- US-A- 4 142 324
- US-A- 4 223 480
- US-A- 5 311 700

## Beschreibung

Die Erfindung betrifft ein Verfahren und eine Vorrichtung zur Anzucht von Pflanzen, insbesondere Laub- und Nadelgehölzen, gemäß dem Oberbegriff des Anspruchs 1 bzw. 6.

Bei einem bekannten System zur Aufnahme von Laub- oder Nadelgehölzen (US-A-5,311,700) werden die auf Freiflächen von Baumschulen gezüchteten Jung- oder Fertigpflanzen aus dem Boden gelöst und in ein Behältersystem umgepflanzt. Dieses zur einmaligen Anwendung vorgesehene System weist einen Drahtkorb mit innerem Kunststoffvlies auf, der als Einheit am Verwendungsort eingepflanzt wird. Bei einem Behältersystem gemäß US-A-4,223,480 werden die Pflanzen in an sich bekannten Kunststoff- und Keramiktöpfen gezüchtet, die als Abfallteile unverrottbar sind.

Die Erfindung befaßt sich mit dem Problem, ein Verfahren und eine Vorrichtung zur Anzucht von Laub- oder Nadelgehölzen zu schaffen, die bei vereinfachter Verschulung einen hinreichend dichten Wurzelballen mit triebfähigen Wurzeln bewirken, dabei das Gehölz zu weitgehend beliebigen Pflanzzeiten für einen Einsatz am endgültigen Standort verfügbar ist und hier bei vollständiger biologischer Abbaubarkeit der Anzuchtbeälter ein schnelles Auswachsen der Pflanze mit verbesserter Bodenhaftung ermöglicht wird.

Die Erfindung löst dieses Problem mit einem die Merkmale des Anspruchs 1 aufweisenden Verfahren sowei einer Vorrichtung mit den Merkmalen des kennzeichnenden Teils des Anspruchs 6. Hinsichtlich wesentlicher weiterer Ausgestaltungen des erfindungsgemäßen Verfahrens und der erfindungsgemäßen Vorrichtung wird auf die Ansprüche 2 bis 5 bzw. 7 bis 22 verwiesen.

Das erfindungsgemäße Verfahren ermöglicht eine gegenüber der bekannten Verschulung von Pflanzen verbesserte Wachstumssteuerung von Jung- oder Fertigpflanzen, deren den Bereich des Wurzelballens vergrößernde Wurzeltriebe in der aus natürlichem, verrottbarem Material bestehenden und eine dehnungsfähige Vlies-Umhüllung bildenden Gefäßwandung oberirdisch aufgenommen sind. In diesem Anzuchtbehälter durchlaufen die Pflanzen einen der natürlichen Wurzelbildung förderlichen und auch in horizontaler Richtung ungehindert Wurzeltriebe bildenden Wachstumsprozeß, derart, daß die bis in das Vliesmaterial einwachsenden und hier unter Wirkung von Licht und Umgebungsluft eine Verharrungsstellung einnehmenden Wurzelspitzen beim späteren Einsetzen des Wurzelballens am endgültigen Verwendungsort durch den Kontakt des Wurzelballens mit dem Umgebungsboden sofort die Vliesschicht nach außen hin vollständig durchdringen und diese Neubildung von Wurzelspitzen zu einer schnellen Einwurzelung der Pflanze führt. Die Pflanze erreicht bereits nach kurzer Zeit am endgültigen Verwendungsort einen hohen Grad an Selbstversorgung, so daß damit die Bodenhaftung der Pflanze vorteilhaft schnell verbessert ist und insbesondere bei hochgewachsenen Gehölzen nach kurzer Zeit eine hinreichende Windstabilität am endgültigen Standort erreicht ist.

Mit der erfindungsgemäßen Vorrichtung ist eine Baueinheit nach Art eines Behälter-Sets geschaffen, mit dem die oberirdische Verschulung insbesondere der Laub- oder Nadelgehölze möglich ist. Dabei wird eine wesentliche Arbeitserleichterung erreicht, da die Wurzeln der Pflanzen nicht mehr aus dem Erdreich zu entnehmen sind und ein Wurzelbeschnitt entbehrlich ist. Am Ende einer Wachstumsperiode ist lediglich die Stützbaugruppe von dem teilweise in seiner Gefäßwandung durchwurzelten Anzuchtbehälter zu lösen und dieser kann als biologische Einheit mit der Pflanze zu einer gemeinsamen Verpflanzung abgegeben werden. Die Pflanze mit dem ersten Anzuchtbehälter kann mit geringem Aufwand auch in einen neuen, zweiten Anzuchtbehälter, ggf. unter Beifügung von Humus, eingesetzt werden und danach ist mit einer zweiten, an das vergrößerte Volumen angepaßten Stützbaugruppe die außenseitige Stabilisierung und oberirdische Halterung in einer zweiten Wachstumsphase möglich. Dieser Verschulungsvorgang kann mit einer entsprechenden Anzahl von unterschiedliche Volumina aufweisenden Anzuchtbehältern und diese in ihrem Innenraum aufnehmenden Stützbaugruppen über mehrere Wachstumsperioden beliebig wiederholt werden. Damit wird die Pflanze bzw. deren Wurzelballen als Einheit mit der Vlieswandung im Wachstum so gesteuert, daß ein mit dem Anzuchtbehälter verpflanzbarer Wurzelballen gebildet wird und der Aufwand an Personal und Handarbeit dabei wesentlich verringert ist.

Durch die oberirdische Anzucht der Gehölze sind diese jederzeit in einem verkaufsfertigen Zustand und können auch zu bisher nicht üblichen Verkaufszeiten, insbesondere in Frostperioden, zur bestimmungsgemäßen Verpflanzung abgegeben werden.

Hinsichtlich weiterer Einzelheiten und Vorteile der Erfindung wird auf die nachfolgende Beschreibung und die Zeichnungen verwiesen, in denen das erfindungsgemäße Verfahren und die Vorrichtung anhand eines Ausführungsbeispiels näher erläutert sind. In der Zeichnung zeigen:
- Fig. 1: eine Prinzipdarstellung eines in einem Anzuchtbehälter befindlichen Gehölzes mit einer dessen Wurzelballen in Form eines Stützbehälters zugeordneten Vorrichtung, die zur Entnahme der Pflanze geöffnet ist,
- Fig. 2: eine Prinzipdarstellung einer aus durchwurzelbarem Vliesmaterial bestehenden und den Anzuchtbehälter bildenden Matte,
- Fig. 3: eine Schnittdarstellung durch die Anzuchtmatte gemäß einer Linie III-III in Fig. 2,
- Fig. 4: eine Prinzipdarstellung ähnlich Fig. 2 mit der einen geschlitzten Teilbereich mit Durchlaßöffnung aufweisenden Vliesmatte,
- Fig. 5: eine Querschnittsdarstellung gemäß einer Linie V-V in Fig. 4,
- Fig. 6 und Fig. 7: jeweilige Perspektivdarstellungen der zwei Vliesmatten gemäß Fig. 2 und Fig. 4 in gefalteter Montagestellung,
- Fig. 8: eine Einzeldarstellung der Sütztvorrichtung zur Aufnahme des Anzuchtbehälters in aufgeklappter Öffnungsstellung ähnlich Fig. 1,
- Fig. 9: die Stützvorrichtung gemäß Fig. 8 in der den Anzuchtbehälter aufnehmenden Schließstellung,
- Fig. 10: eine Perspektivdarstellung der Stützvorrichtung mit innenliegendem Anzuchtbehälter, und
- Fig. 11: eine Ausschnittsdarstellung eines Wurzelballens gemäß einer Linie XI-XI in Fig. 1.

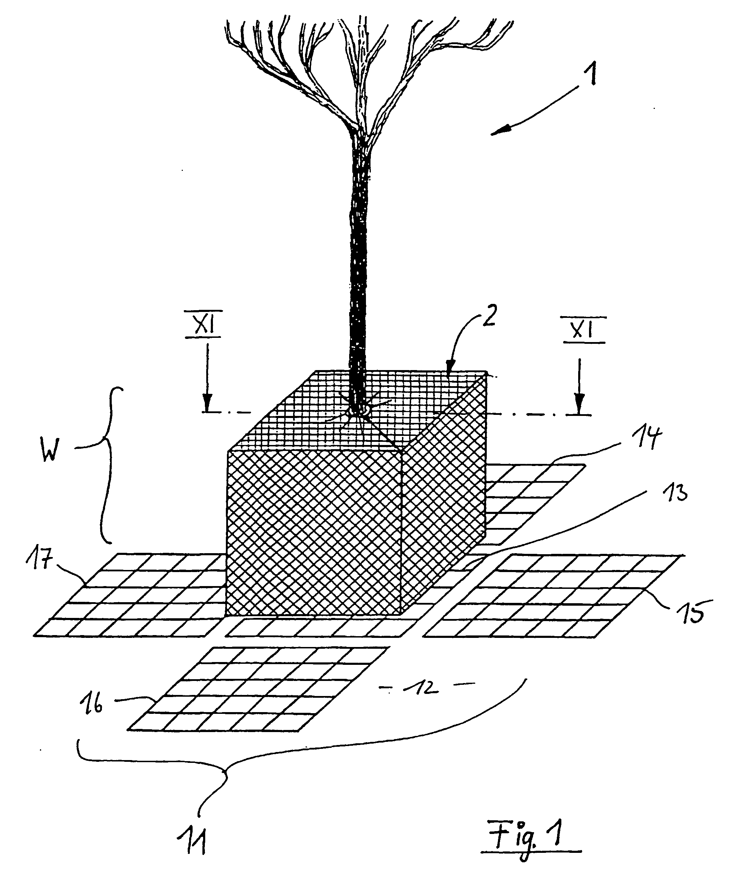

In Fig. 1 ist eine insgesamt mit 1 bezeichnete Pflanze, insbesondere in Form eines Laub- oder Nadelgehölzes, dargestellt, deren Wurzelbereich mit einem, üblicherweise bis zur Einpflanzung der Pflanze am endgültigen Verwendungsort in einer Baumschule gezogenen, Wurzelballen W ausgebildet ist.

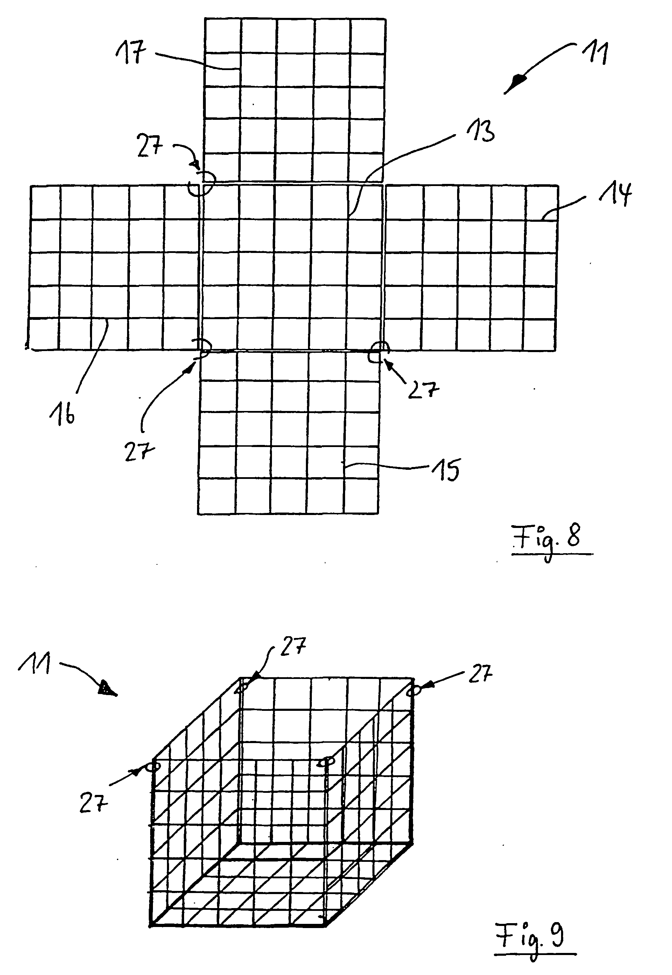

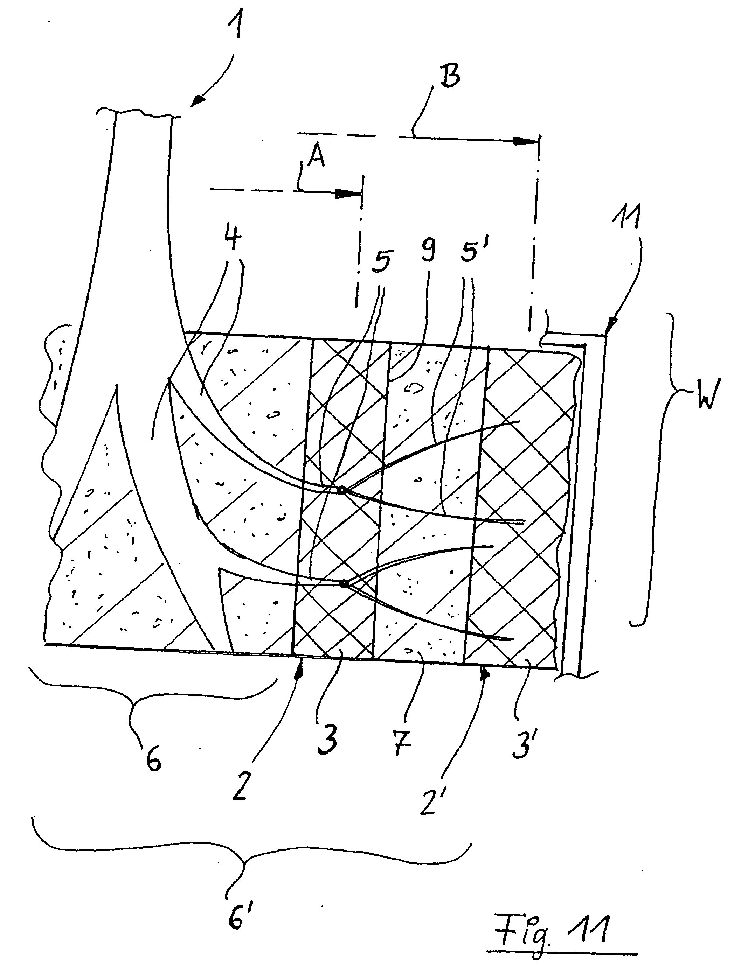

Die Pflanze 1 wird gemäß dem erfindungsgemäßen Verfahren zur Wachstumssteuerung im Bereich des Wurzelballens W bei der Anzucht einer besonders schonenden Verschulung unterzogen. Die im Wuchsstadium einer Jung- oder Fertigpflanze befindliche Pflanze 1 wird dabei in einen ersten Anzuchtbehälter 2 aus durchwurzelbarem Vliesmaterial eingesetzt und danach wird die Pflanze 1 während zumindest einer ersten Wachstumsperiode bei Wachstumsbedingungen oberirdisch gehalten. Das Wachstum des Wurzelballens W wird unter diesen Bedingungen so gesteuert, daß in das Vliesmaterial 3 (Fig. 7, Fig. 8) des ersten Anzuchtbehälters 2 einwachsende Wurzeltriebe 4 (Fig. 11) gebildet werden und danach die verschulbare Pflanze mit einem in den Anzuchtbehälter 2 integrierten Wurzelballen W als biologische Einheit bereitgestellt wird (Fig. 1).

Der Pflanzen- bzw. Wurzelwuchs innerhalb des oberirdisch gehaltenen Anzuchtbehälters 2 ist vorteilhaft so beeinflußt, daß die in das Vliesmaterial 3 einwachsenden Wurzeltriebe 4 im Bereich ihrer Wurzelspitzen 5 bei Licht- und/oder Lufteinwirkung in ihrem weiteren Wachstum unterbrochen werden, gleichzeitig im Inneren 6 des Wurzelballens W (Fig. 11) ein Austreiben von sproßbürtigen Wurzeltrieben gefördert wird und damit ein kompakter Wurzelballen W ohne Drallwurzeln o.dgl. Mißbildungen erzeugt werden kann. Bei einer nachfolgenden Verpflanzung des Gewächses gemeinsam mit dem ersten durchwurzelten Anzuchtbehälter 2 in einer Bodenschicht 7 können die im Vliesmaterial 3 verharrenden Wurzeltriebe 5 sofort austreiben und mit neuen Wurzeltrieben 5' erfolgt eine vollständige Durchwurzelung des Vliesmaterials 3.

In der Schnittdarstellung gemäß Fig. 11 ist die Pflanze 1 nach der ersten Wachstumsperiode (veranschaulicht durch einen Pfeil A) gemeinsam mit dem ersten Anzuchtbehälter 2 in einen zweiten, ebenfalls durchwurzelbare Wandungen mit dem Vliesmaterial 3' aufweisenden Anzuchtbehälter 2' eingesetzt, wobei ein zwischen den beiden Behälterwandungen befindlicher Spaltbereich mit einer Bodenschicht 7, beispielsweise Humus, ausgefüllt ist. Mit dieser Bodenschicht 7 wird weitere Lichteinwirkung auf den jetzt inneren Anzuchtbehälter 2 bzw. den Wurzelballen 6 verhindert, so daß die Wurzelspitzen 5' bei entsprechender Versorgung mit Nährstoffen den Außenrand 9 des ersten Anzuchtbehälters 2 durchwachsen können und ein in radialer Richtung (Pfeil B) vergrößerter Wurzelballen W mit in das Vliesmaterial 3' einwachsenden Wurzelspitzen 5' gebildet wird, die den Innenraum 6' mit im wesentlichen horizontaler Ausbreitungsrichtung durchgreifen.

Zur Durchführung des Verfahrens ist die Pflanze 1 während sämtlicher ihrer Wachstumsperioden A, B (Fig. 11) in dem Anzuchtbehälter 2, 2' über eine oberirdische, außenliegende Abstützvorrichtung in Form eines Stützbehälters 11 (Fig. 9) so gehalten, daß in dieser Stützstellung eine allseitige Düngung und Bewässerung des innenliegenden Anzuchtbehälters 2, 2' möglich ist.

Zur weiteren Verschulung oder zum Transport an den Verwendungsort kann die Pflanze 1 gemeinsam mit dem einen oder den mehreren Anzuchtbehältern 2, 2' aus der oberirdischen Abstützung 11 gelöst werden (Fig. 1) und diese ist für eine neue Pflanze wiederholt verwendbar.

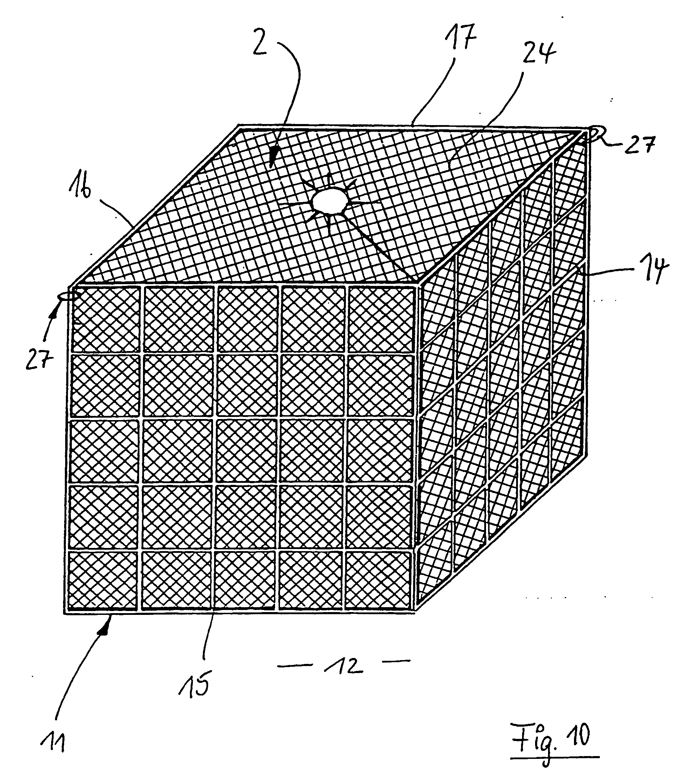

Der in Fig. 8 und 9 dargestellte Stützbehälter 11 ist als eine Vorrichtung zur Aufnahme des Anzuchtbehälters 2, 2' vorgesehen, die als ein Bausatz nach Art eines Behälter-Sets ausgebildet ist. In dem Stützbehälter 11 ist die Pflanze 1 in einer unmittelbar auf bzw. über dem Boden 12 befindlichen Verwahrstellung langzeitstabil so abgestützt, daß der im Behälter aufgenommene Wurzelballen im wesentlichen frei zugänglich ist. Die jeweiligen Boden- und Seitenwandteile 13 bzw. 14, 15, 16, 17 können bereits nach einer ersten Wachstumsperiode der Pflanze 1 aus ihrer Verbindungsstellung (Fig. 10) gelöst und die Pflanze 1 mit dem Wurzelballen W entnommen werden.

Die Prinzipdarstellung gemäß Fig. 11 verdeutlicht in Zusammenschau mit dem aufgeklappten Stützbehälter 11 gemäß Fig. 8 die Vorgehensweise bei einer mehrmaligen Verschulung der Pflanze 1. Mehrere der Stützbehälter 11 können dabei mit den vorgefertigten Anzuchtbehältern 2, 2' als ein Topf-in-Topf-System vorgesehen sein, mit dem der Aufwand bei einer Verschulung der Pflanze über mehrere Wachstumsperioden vorteilhaft verringert ist. Für ein größeres Volumen des Innenraumes 6' erfordernde Wurzelballen wird beispielsweise der zweite Anzuchtbehälter 2' verwendet, in diesen die Pflanze 1 mit wenigen Handgriffen umgesetzt und diese Einheit in einen größeren Stützbehälter 11 eingesetzt.

Für die vorbeschriebene Wachstumssteuerung innerhalb des Behälter-Systems sind Anzuchtbehälter 2, 2' vorgesehen, die aus einem Kokosfasern mit Latex aufweisenden Kokos-Vliesmaterial 3, 3' geformt sind. Dieses Vliesmaterial ist biologisch vollständig abbaubar und weist eine von den Wurzeltrieben 4 der Pflanze 1 durchdringbare Struktur mit elastischen Eigenschaften auf. Das Vliesmaterial 3, 3' kann über eine Preßverformung zu einem stabilen Pflanz- und Kulturgefäß geformt sein, das nach Art eines Topfes die Pflanze mit Wurzelballen in einem Humusgemisch aufnimmt (nicht dargestellt).

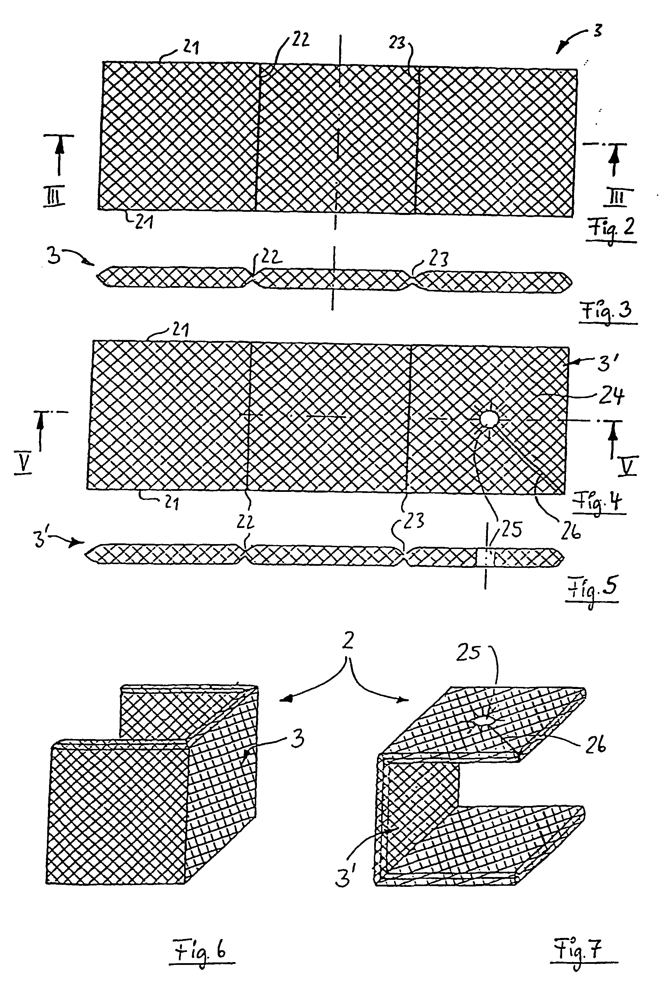

Die Darstellungen gemäß Fig. 2 bis 7 bzw. 10 verdeutlichen, daß der Anzuchtbehälter 2, 2' aus einer oder mehreren, den Wurzelballen 6 und das Humusgemisch 7 aufnehmenden Kokosvlies-Matte geformt ist und diese in den Stützbehälter 11 eingelegt wird (Fig. 10). Die Vliesmatte 3, 3' weist dabei eine rechteckige Umfangskontur auf, die durch senkrecht zu den Längsseiten 21 verlaufende Sollfaltlinien 22, 23 in drei gleich große Teilbereiche unterteilt ist. Diese Sollfaltlinien 22, 23 sind durch eine linienförmige Pressung und/oder Perforierung des Vliesmaterials gebildet.

Zur Bildung des geschlossenen Anzuchtbehälters 2, 2' werden die Kokosvliesmatten 3, 3' zu der gemäß Fig. 6 und 7 dargestellten Montagestellung gefaltet, danach in quaderförmiger Grundgestalt zusammengesteckt und als Steckteile gemeinsam in den Stützbehälter 11 (Fig. 10) eingesetzt.

In einem Teilbereich 24 der Vliesmatte 3' ist dabei eine obere Durchlaßöffnung 25 vorgesehen, die mittels eines Trennschlitzes 26 eine einfache Aufnahme der Pflanze 1 und/oder des Humusfüllbodens (Fig. 1) ermöglicht. In zweckmäßiger Ausführung ist der Aufnahmeraum des Stützbehälters 11 quaderförmig gebildet (Fig. 11), so daß die im wesentlichen formgleichen Vliesmatten 3,3' gemäß Fig. 6 und 7 mit geringem Aufwand herstellbar, montierbar und einsetzbar sind.

Zur Halterung des Anzuchtbehälters 2 (Fig. 10) in der Gebrauchsstellung sind die Wandungen 13, 14, 15, 16, 17 des Stützbehälters 11 über jeweilige Verbindungsglieder 27 miteinander verbunden und die Oberseite des Stützbehälters 11 ist lediglich vom Teilbereich 24 der Vliesmatte 3' verschlossen. Im Bereich sämtlicher Außenwandungen ist damit der Wurzelballen W (Fig. 11) für eine Bewässerung zugänglich und im Nahbereich der Durchgangsöffnung 25 ist der Wurzelballen derart abgedeckt, daß hier ein ungewolltes Wachsen von Unkraut verhindert ist.

Der Stützbehälter 11 weist im Bereich seiner Wandungen 13, 14, 15, 16, 17 eine insgesamt verwindungssteife Gitterstruktur aus Metall, Kunststoff, Hartgummi und/oder Holz auf, so daß eine mehrmalige Verwendung dieser Einzelbauteile möglich ist. In zweckmäßiger Ausführung können als Verbindungsglieder 27 für die Wandungsteile des Stützbehälters 11 jeweilige Rastverschlußteile (nicht dargestellt) vorgesehen sein, so daß eine einfache Verbindung der Bauteile möglich ist. Durch die konturgleiche Rechteckform der Wandungsteile des Stützbehälters 11 sind diese Bauteile für eine mehrmalige Verwendung auch untereinander austauschbar. In einer weiteren Ausführungsform des Topf-in-Topf-Systems ist außerdem denkbar, daß sowohl der Anzuchtbehälter 2, 2' als auch der Stützbehälter 11 als einstückiges Bauteil-Set ausgebildet sind.

## Patentansprüche

1. Verfahren zur Wachstumssteuerung von Laub- oder Nadelgehölzen, die als hochwertige Solitäre vor einer Einpflanzung am endgültigen Verwendungsort in Baumschulen gezüchtet werden, wobei im Wurzelbereich der Pflanze (1) ein Wurzelballen (W) erzeugt wird, **dadurch gekennzeichnet, daß** die Pflanze (1) als Jung- oder Fertigpflanze in einem ersten aus durchwurzelbarem Kokosfaser-Latex-Vliesmaterial bestehenden Anzuchtbehälter (2) gezogen wird, danach die Pflanze (1) gemeinsam mit dem ersten-Anzuchtbehälter (2) in einem zweiten, aus durchwurzelbarem Kokosfaser-Latex-Vliesmaterial gebildeten Anzuchtbehälter (2') eingesetzt wird, in diesem die Pflanze (1) während zumindest einer Wachstumsperiode bei Wachstumsbedingungen in einer oberirdischen Stützstellung gehalten wird, dabei den ersten Anzuchtbehälter (2) durchgreifende sowie zumindest teilweise in die Kokosfasermatte des zweiten Anzuchtbehälters (2) einwachsende Wurzeltriebe (5) gebildet werden, und danach die Pflanze (1) mit einem in die vollständig abbaubaren Anzuchtbehälter (2, 2') integrierten Wurzelballen (W) als biologische Einheit bereitgestellt wird.

2. Verfahren nach Anspruch 1, **dadurch gekennzeichnet, daß** die Pflanze (1) bei das Wachstum zumindest im Bereich von Wurzelspitzen unterbrechenden sowie im Inneren des Wurzelballens (W) ein Austreiben von sproßbürtigen Wurzeln fördernden Wachstumsbedingungen gehalten wird und die Pflanze (1) gemeinsam mit dem ersten durchwurzelten Anzuchtbehälter (2) in eine Bodenschicht (7) verpflanzt wird, so daß danach zu dieser hin die in dem Vliesmaterial verharrenden Wurzeltriebe austreiben und dabei das Vliesmaterial durchwurzelt wird.

3. Verfahren nach Anspruch 1 oder 2, **dadurch gekennzeichnet, daß** die Pflanze (1) während der Wachstumsperiode von dem zweiten Anzuchtbehälter (2') in Form der Kokosfasermatte allseitig in der oberirdischen Stützstellung umfaßt, mit außenseitigen Bauteilen gestützt und in dieser Stellung der Wurzelballen allseitig gedüngt und gewässert wird.

4. Verfahren nach einem der Ansprüche 1 bis 3, **dadurch gekennzeichnet, daß** die Pflanze (1) gemeinsam mit dem einen oder mehreren Anzuchtbehälter(n) (2; 2') zur weiteren Verschulung oder Einpflanzung aus der oberirdischen Stützstellung gelöst wird und die Bauteile der Abstützung wiederverwendet werden.

5. Verfahren nach einem der Ansprüche 1 bis 4, **dadurch gekennzeichnet, daß** der Wurzelballen (W) bei Düngung und Bewässerung eine im Inneren des Anzuchtbehälters (2) befindliche Humuseinlage durchwurzelt, diese Wurzeltriebe (4) der Pflanze (1) in das Kokosfaser-Latex-Vliesmaterial einwachsen und in deren Wandung verbleiben und gleichzeitig neue sproßbürtige Wurzeltriebe im Inneren des Wurzelballens (W) gebildet werden.

6. Vorrichtung zur Wachstumssteuerung und Verschulung von Laub- oder Nadelgehölzen gemäß dem Oberbegriff des Anspruchs 1, mit einem deren Wurzelballen (W) in einer über dem Boden (12) befindlichen Verwahrstellung aufnehmenden Behälter-Set mit einem Anzuchtbehälter (2; 2') und einem Stützbehälter (11), **dadurch gekennzeichnet, daß** der aus einem Kokosvlies mit Kokosfasern und Latex bestehende Anzuchtbehälter .(2; 2') von einem aus wiederverwendbaren Bauteilen (13, 14, 15, 16, 17) zusammengesetzten Stützbehälter (11) umgeben ist, derart, daß der mit Wurzeltrieben (5') des Wurzelballens (W) wandungsseitig verwachsene vollständig biologisch abbaubare Anzuchtbehälter (2; 2') für zumindest eine weitere Verschulung oder die Einpflanzung am Verwendungsort aus dem Set entnehmbar ist.

7. Vorrichtung nach Anspruch 6, **dadurch gekennzeichnet, daß** für eine mehrmalige Verschulung der Pflanze (1) mittels des Behälter-Sets jeweils mehrere der Stützbehälter (11) mit mehreren der Anzuchtbehälter (2; 2') ein Topf-in-Topf-System bilden, derart, daß mehrere der nacheinander durchwurzelbaren Anzuchtbehälter (2; 2') zumindest bereichsweise ineinandergreifen und der jeweils äußere von diesen Anzuchtbehältern (2') von dem jeweils an dessen Außenumfang angepaßten Stützbehälter (11) umfaßbar ist.

8. Vorrichtung nach Anspruch 6 oder 7, **dadurch gekennzeichnet, daß** der Kokosfasern mit Latex aufweisende Kokosvlies (3; 3') zu dem Anzuchtbehälter (2; 2') geformt ist, derart, daß dieser zumindest bereichsweise eine von den Wurzeltrieben (5; 5') der Pflanze (1) durchdringbare Struktur aufweist.

9. Vorrichtung nach einem der Ansprüche 6 bis 8, **dadurch gekennzeichnet, daß** ein erster der Anzuchtbehälter (2) aus einem über eine Preßverformung zu einem stabilen Pflanz- und Kulturgefäß geformten Kokosfaser-Latex-Vlies besteht, in das die Pflanze (1) mit Wurzelballen (W) und einem Humusgemisch (7) einsetzbar ist.

10. Vorrichtung nach einem der Ansprüche 6 bis 9, **dadurch gekennzeichnet, daß** ein den ersten (2) umfassender zweiter Anzuchtbehälter (2') aus einer oder mehreren, den Wurzelballen (W) und das Humusgemisch (7) aufnehmenden Kokosfasermatte(n) (3') geformt und diese in den Stützbehälter (11) eingelegt ist (sind).

11. Vorrichtung nach einem der Ansprüche 6 bis 10, **dadurch gekennzeichnet, daß** die Kokosfasermatte (3') eine rechtekkige Umfangskontur aufweist und diese durch senkrecht zu den Längsseiten (21) verlaufende Sollfaltlinien (22, 23) in drei gleich große Teilbereiche unterteilt ist.

12. Vorrichtung nach einem der Ansprüche 6 bis 11, **dadurch gekennzeichnet, daß** die Sollfaltlinien (22, 23) der Kokosfasermatte durch linienförmige Pressung und/oder Perforierung des Kokosvlieses gebildet sind.

13. Vorrichtung nach einem der Ansprüche 6 bis 12, **dadurch gekennzeichnet, daß** in der Kokosfasermatte (3; 3') eine obere Durchlaßöffnung (25) für die Pflanze (1) vorgesehen ist.

14. Vorrichtung nach einem der Ansprüche 6 bis 13, **dadurch gekennzeichnet, daß** die Durchlaßöffnung (25) als eine aus einem Teilbereiche (24) der Kokosfasermatte (3') ausgestanzte Kreisfläche ausgebildet ist.

15. Vorrichtung nach einem der Ansprüche 6 bis 14, **dadurch gekennzeichnet, daß** die Kokosfasermatte (3') im Bereich der Durchlaßöffnung (25) mit zumindest einem Trennschlitz (26) versehen ist.

16. Vorrichtung nach einem der Ansprüche 6 bis 15, **dadurch gekennzeichnet, daß** der Anzuchtbehälter (2; 2') aus zwei einen quaderförmigen Aufnahmeraum für den Wurzelballen (W) bildenden Kokosfasermatten (3; 3') zusammengesetzt ist und die Durchlaßöffnung (25) oberseitig in einem Teilbereich (24) einer der Matten (3') angeordnet ist.

17. Vorrichtung nach einem der Ansprüche 6 bis 16, **dadurch gekennzeichnet, daß** der Stützbehälter (11) aus jeweiligen über Verbindungsglieder (27) aneinander abstützbaren und in eine den Wurzelballen. (W) freigebende Öffnungsstellung verlagerbaren Boden- und Seitenwandteilen (13, 14, 15, 16, 17) gebildet ist.

18. Vorrichtung nach einem der Ansprüche 6 bis 17, **dadurch gekennzeichnet, daß** die Boden- und Seitenwandteile (13, 14, 15, 16, 17) des Stützbehälters (11) eine quader- oder zylinderförmige Umfangskontur mit einer oberen Aufnahmeöffnung bilden.

19. Vorrichtung nach einem der Ansprüche 6 bis 18, **dadurch gekennzeichnet, daß** die Wandteile (13, 14, 15, 16, 17) des Stützbehälters (11) als jeweilige eine verwindungssteife Gitterstruktur aus Metall, Kunststoff und/oder Holz aufweisende Einzelbauteile ausgebildet sind.

20. Vorrichtung nach einem der Ansprüche 6 bis 19, **dadurch gekennzeichnet, daß** als Verbindungsglieder (27) für die Wandteile (13 bis 17) jeweilige Rastverschlußteile vorgesehen sind.

21. Vorrichtung nach einem der Ansprüche 6 bis 20, **dadurch gekennzeichnet, daß** die Boden- und Seitenwandteile (13 bis 17) untereinander austauschbar sind.

22. Vorrichtung nach einem der Ansprüche 6 bis 21, **dadurch gekennzeichnet, daß** sowohl der Anzuchtbehälter (2; 2') als auch der Stützbehälter (11) einstückig ausgebildet sind.

## Claims

1. Method for controlling the growth of deciduous or coniferous woods which are cultivated as high quality solitary trees before planting in the final location of use in tree nurseries, wherein a root bale (W) is produced in the root area of the plants (1), **characterised in that** the plant (1) is grown as a young or mature plant in a first grow container (2) consisting of coconut fibre-latex-non-woven fabric material through which roots may penetrate, **in that** the plant (1) is inserted together with the first grow container (2) in a second grow container (2') formed from coconut fibre-latex-non-woven material through which roots may penetrate, the plant (1) is Kept in the container for at least one growth period under growing conditions in an above ground supporting position, wherein root shoots (5) extending through the first grow container (2) and growing at least partially into the coconut fibre mat of the second grow container (2) are formed and the plant (1) is then supplied as a biological unit with a root bale (W) integrated in the fully degradable grow container (2, 2').

2. Method according to claim 1, **characterised in that** the plant (1) is kept under growing conditions interrupting growth at least in the region of root tips and promoting the sprouting of shooting roots inside the root bale (W), and **in that** the plant (1) is planted with the first grow container (2) through which the roots nave penetrated in a layer of soil (7) so that the root shoots remaining in the non-woven fabric material then extend towards the layer of soil and in doing so penetrate the non-woven fabric material.

3. Method according to claim 1 or 2, **characterised in that** the plant (1) is enclosed on all sides during the growth period by the second grow container (2') in the form of the coconut fibre mat in the above-ground support position, is supported with external components and the root bale is fertilised and watered on all sides in this position.

4. Method according to one of claims 1 to 3, **characterised in that** the plant (1), together with one or more grow container(s) (2; 2') is released from the above-ground supporting position for further pricking out or planting, and the components of the support are reused.

5. Method according to one of claims 1 to 4, **characterised in that** the root bale (W) penetrates a humus insert inside the grow container (2) during fertilising and watering, **in that** these root shoots (4) of the plant (1) grow into the coconut fibre-latex-non-woven fabric material and remain in its wall, and at the same time new sprouting root shoots are formed inside the root bale (W).

6. Device for growth control and transplanting deciduous or coniferous woods according to the preamble of claim 1, with a set of containers receiving their root bales (W) in a storage position located above the soil (12), with a grow container (2; 2') and a support container (11), **characterised in that** the grow container (2; 2') consisting of a coconut non-woven fabric, with coconut fibres and latex, is surrounded by a support container (11) composed of re-usable components (13, 14, 15, 16, 17) so that the fully biodegradable grow container (2; 2'), grown with root shoots (5') of the root bale (W) on the wall side can be removed from the set for at least one further transplanting or planting at the place of use.

7. Device according to claim 6, **characterised in that** several of the supporting containers (11) form a pot-in-pot system with several of the grow containers (2; 2') for multiple transplanting of the plants (1) by means of the container set so that several of the grow containers (2; 2') through which roots penetrate, one after the other, engage at least in certain areas in one another and the outside of each of these grow containers (2') can be enclosed by the support container adapted to each of their outer circumferences.

8. Device according to claim 6 or 7, **characterised in that** the coconut non-woven (3; 3') fabric, exhibiting coconut fibres with latex, is formed into the grow container (2; 2') so that the latter exhibits at least in certain areas a structure that can be penetrated by the root shoots (5; 5') of the plant (1).

9. Device according to one of claims 6 to 8, **characterised in that** a first of the grow containers (2) consists of a coconut fibre-latex-non-woven fabric formed by compressive deformation into a stable plant and cultivation vessel, into which material the plant (1), with root bale (W) and a humus mixture (7), may be inserted.

10. Device according to one of claims 6 to 9, **characterised in that** a second grow container (2') enclosing the first (2), is formed from one or more coconut fibre mat(s) (3') receiving the root bale (W) and the humus mixture (7), and **in that** this mat is inserted in the support container (11).

11. Device according to one of claims 6 to 10, **characterised in that** the coconut fibre mat (3') exhibits a rectangular peripheral contour and **in that** this contour is divided by theoretical folding lines (22, 23) running perpendicularly to the longitudinal sides (21) into three partial areas of the same size.

12. Device according to one of claims 6 to 11, **characterised in that** the theoretical folding lines (22, 23) of the coconut fibre mat are formed by linear pressure and/or perforation of the coconut non-woven material.

13. Device according to one of claims 6 to 12, **characterised that** an upper admission opening (25) is provided for the plant (1) in the coconut fibre mat (3; 3').

14. Device according to one of claims 6 to 13, **characterised in that** the admission opening (25) is designed as a circular surface punched out of a partial area (24) of the coconut fibre mat (3').

15. Device according to one of claims 6 to 14, **characterised in that** the coconut fibre mat (3') is provided in the area of the admission opening (25) with at least one separating slot (26).

16. Device according to one of claims 6 to 15, **characterised in that** the grow container (2; 2') is composed of two coconut fibre mats (3; 3') forming a cuboid receiving space for the root bale (W) and **in that** the admission opening (25) is arranged at the top in a partial area (24) of one of the mats (3').

17. Device according to one of claims 6 to 16, **characterised in that** the support container (11) is formed from bottom and side wall sections (13, 14, 15, 16, 17) that can each support each other by means of connecting links (27) and can be displaced into an opening position revealing the root bale (W).

18. Device according to one of claims 6 to 17, **characterised in that** the bottom and side wall sections (13, 14, 15, 16, 17) of the support container (11) form a cuboid or cylindrical peripheral contour with an upper receiving opening.

19. Device according to one of claims 6 to 18, **characterised in that** the wall sections (13, 14, 15, 16, 17) of the support container (11) are each designed as individual components each exhibiting a torsion resistant lattice structure of metal, plastic and/or wood.

20. Device according to one of claims 6 to 19, **characterised in that** stop sealing parts are provided as connecting links (27) for each of the wall sections (13 to 17).

21. Device according to one of claims 6 to 20, **characterised in that** the bottom and side wall sechons (13 to 17) are interchangeable.

22. Device according to one of claims 6 to 21, **characterised in that** both the grow container (2; 2') and the support container (11) are designed in one piece.

## Revendications

1. Procédé pour la régulation de la croissance de feuillus ou de conifères élevés en pépinière en tant que solitaires de grande valeur avant une plantation au lieu définitif d'utilisation, dans lequel, dans la région des racines du végétal (1) est produite une motte racinaire (W), **caractérisé en ce que** le végétal (1) est, en tant que jeune plant ou arbre formé, élevé dans un premier conteneur de culture (2) consistant en un matériau de voile de latex - fibres de coco perméable aux racines, après quoi le végétal (1) est introduit, avec le premier conteneur de culture (2) dans un deuxième conteneur de culture (2') constitué d'un matériau de voile de latex - fibres de coco perméable aux racines, dans lequel le végétal (1) est maintenu, pendant au moins une période de croissance, dans des conditions de croissance, dans une position d'appui au-dessus du niveau du sol, avec formation de drageons (5) traversant le premier conteneur de culture (2) et tout au moins poussant en partie dans le mat de fibres de coco du deuxième conteneur de culture (2'), après quoi le végétal (1) est fourni avec une motte racinaire (W) intégrée dans les conteneurs de culture totalement dégradables (2,2'), en tant qu'entité biologique.

2. Procédé selon la revendication 1, **caractérisé en ce que** le végétal (1) est maintenu dans des conditions interrompant la croissance, tout au moins dans la région des pointes des racines, et favorisant une pousse de rejets racinaires au sein de la motte racinaire (W), et **en ce que** le végétal (1) est planté, en même temps que le premier conteneur de culture (2) traversé par les racines, dans une couche de sol (7) de manière à ce que les pousses racinaires demeurant dans le matériau de voile s'étendent ensuite dans celle-ci et que le matériau de voile soit ainsi traversé par les racines.

3. Procédé selon la revendication 1 ou 2, **caractérisé en ce que** le végétal (1) est entouré, de tous les côtés et pendant la période de croissance, par le deuxième conteneur de culture (2') en forme de mat de fibres de coco, dans la position d'appui au-dessus du niveau du sol, qu'il est soutenu par des éléments extérieurs et est fertilisé et arrosé de tous les côtés dans cette position de la motte racinaire.

4. Procédé selon l'une quelconque des revendications 1 à 3, **caractérisé en ce que** le végétal (1) est, en même temps que le ou les conteneur (s) de culture (2,2') et aux fins de transplantation ou de plantation, désolidarisé de sa position d'appui au-dessus du niveau du sol et les éléments de soutien sont réutilisés.

5. Procédé selon l'une quelconque des revendications 1 à 4, **caractérisé en ce que** la motte racinaire (W), par engraissement et arrosage, traverse une couche d'humus se trouvant à l'intérieur du conteneur de culture (2), **en ce que** ces drageons (4) du végétal (1) pénètrent dans le matériau de voile de latex - fibres de coco et restent dans sa paroi, et **en ce qu'**en même temps de nouveaux rejets racinaires se forment au sein de la motte racinaire (W).

6. Dispositif pour la régulation de la croissance et la transplantation de feuillus ou de conifères selon le préambule de la revendication 1, avec une série de conteneurs recevant leur motte racinaire (W) dans un système de soutien se trouvant sur le sol (12), comprenant un conteneur de culture (2,2') et un conteneur de contention (11), **caractérisé en ce que** le conteneur de culture (2,2') consistant en un voile de coco comportant des fibres de coco et du latex est entouré d'un conteneur de contention (11) constitué d'éléments réutilisables (13, 14, 15, 16, 17) de manière à ce que le conteneur de' culture totalement biodégradable (2,2') aux parois duquel adhère le drageon (5') de la motte racinaire (W) puisse être désolidarisé du système aux fins d'au moins une autre transplantation ou de la plantation au site d'utilisation.

7. Dispositif selon la revendication 6, **caractérisé en ce que**, pour une transplantation répétée du végétal (1), au moyen de la série de conteneurs, plusieurs conteneurs de contention (11) forment respectivement avec plusieurs des conteneurs de culture (2,2') un système gigogne, de telle manière que plusieurs des conteneurs de culture (2,2') successivement perméables aux racines s'emboîtent au moins en partie l'un dans l'autre et qu'à chaque fois le conteneur de culture extérieur (2') puisse être englobé dans le conteneur de contention (11) adapté à chaque fois à son périmètre extérieur.

8. Dispositif selon la revendication 6 ou 7, **caractérisé en ce que** le voile de coco (3,3') présentant des fibres de coco avec du latex est façonné pour former le conteneur de culture (2,2') de telle manière que celui-ci présente au moins en partie une structure qui puisse être traversée par les drageons (5,5') du végétal (1) .

9. Dispositif selon l'une quelconque des revendications 6 à 8, **caractérisée en ce qu'**un premier des conteneurs de culture (2) est constitué d'un voile de latex - fibres de cocos façonné par pressage de manière à former un conteneur de plantation et de culture stable, dans lequel peut être placé le végétal (1) avec une motte racinaire (W) et un mélange d'humus (7) .

10. Dispositif selon l'une quelconque des revendications 6 à 9, **caractérisé en ce qu'**un deuxième conteneur (2') entourant le premier (2) est formé à partir d'un ou plusieurs mat(s) de fibres de coco (3') englobant la motte racinaire (W) et le mélange d'humus (7) et est placé dans le conteneur de contention (11).

11. Dispositif selon l'une quelconque des revendications 6 à 10, **caractérisé en ce que** le mat de fibres de coco (3') présente un contour périphérique rectangulaire et **en ce que** celui-ci est subdivisé par des lignes de pliage (22,23) perpendiculaires aux côtés longitudinaux (21) en trois zones partielles de même grandeur.

12. Dispositif selon l'une quelconque des revendications 6 à 11, **caractérisé en ce que** les lignes de pliage (22,23) du mat de fibres de cocos sont formées par pressage en ligne et/ou par perforation du voile de coco.

13. Dispositif selon l'une quelconque des revendications 6 à 12, **caractérisé en ce que**, dans le mat de fibres de coco (3,3'), il est prévu une ouverture de passage supérieure (25) pour le végétal (1).

14. Dispositif selon l'une quelconque des revendications 6 à 13, **caractérisé en ce que** l'ouverture de passage (25) est formée en tant qu'une surface circulaire percée dans une zone partielle (24) du mat de fibres de coco (3').

15. Dispositif selon l'une quelconque des revendications 6 à 14, **caractérisé en ce que** le mat de fibres de coco (3') est muni, dans la région de l'ouverture de passage (25), d'au moins une fente de séparation (26).

16. Dispositif selon l'une quelconque des revendications 6 à 15, **caractérisé en ce que** le conteneur de culture (2,2') est composé de deux mats de fibres de coco (3,3') formant un espace de réception quadrangulaire pour la motte racinaire (W) et **en ce que** l'ouverture de passage (25) est placée du côté supérieur dans une zone partielle (24) de l'un des mats (3').

17. Dispositif selon l'une quelconque des revendications 6 à 16, **caractérisé en ce que** le conteneur de contention (11) est formé de parties de fond et latérales (13, 14, 15, 16, 17) pouvant respectivement s'appuyer l'une à l'autre via des membres de liaison (27) et pouvant être placées en une position d'ouverture libérant la motte racinaire (W).

18. Dispositif selon l'une quelconque des revendications 6 à 17, **caractérisé en ce que** les parties de fond et latérales (13, 14, 15, 16, 17) du conteneur de contention (11) forment un contour périphérique quadrangulaire ou cylindrique avec une ouverture de réception supérieure.

19. Dispositif selon l'une quelconque des revendications 6 à 18, **caractérisé en ce que** les parties de paroi (13, 14, 15, 16, 17) du conteneur de contention (11) sont formées d'éléments individuels présentant à chaque fois une structure en treillis résistante au gauchissement et constituée de métal, de plastique et/ou de bois.

20. Dispositif selon l'une quelconque des revendications 6 à 19, **caractérisé en ce qu'**il est à chaque fois prévu comme membres de liaison (27) pour les parties de paroi (13 à 17) des verrouillages à enclenchement.

21. Dispositif selon l'une quelconque des revendications 6 à 20, **caractérisé en ce que** les parties de fond et de parois (13 à 17) sont interchangeables.

22. Dispositif selon l'une quelconque des revendications 6 à 21, **caractérisé en ce que** tant les conteneurs de culture (2,2') que le conteneur de contention (11) sont conformés en une pièce.
